# FASCICULE DE BREVET EUROPEEN

(11) **EP 1 127 030 B1**
(45) Date de publication et mention de la délivrance du brevet: **31.03.2004**
(21) Numéro de dépôt: 99949077.4
(22) Date de dépôt: 19.10.1999
(51) Int. Cl.: C02F 1/32, B01J 19/12, B01D 53/00

(54) **DISPOSITIF D'EPURATION DE FLUIDE PAR IMPULSIONS PHOTONIQUES**
VORRICHTUNG ZUR REINIGUNG EINES FLUIDS MIT HILFE PHOTOIONISCHER IMPULSE
DEVICE FOR PURIFYING FLUID WITH PHOTONIC PULSES

(30) Priorité: 20.10.1998 FR 9813386
(43) Date de publication de la demande: 29.08.2001
(73) Titulaire: Solsys, 13002 Marseille (FR)
(72) Inventeur: MARTY, Stéphane, F-13007 Marseille (FR); GRAFFEO, Alphonse, F-13500 Martigues (FR); STROBBEL, Nicolas, F-13006 Marseille (FR); GUERAUD, Jean-Claude, F-13008 Marseille (FR)
(74) Mandataire: Domange, Maxime
(86) Numéro de dépôt international: PCT/FR1999/002545
(87) Numéro de publication internationale: WO 2000/023381

(56) Documents cités:
- WO-A-84/00506
- GB-A- 191 205 635
- US-A- 2 636 991
- US-A- 3 676 318

## Description

La présente invention a pour objet un dispositif d'épuration de fluide par impulsions photoniques.

Il est en particulier destiné au traitement de l'eau en général, aussi bien de l'eau destinée à un réseau de distribution, de rejet ou de consommation, que de l'eau contenue dans des réservoirs ou des bassins tels que ceux destinés à la pisciculture. Le fluide traité peut cependant être un gaz tel que l'air ou un liquide autre que l'eau.

Les polluants chimiques ou organiques présentent dans un fluide peuvent être éliminés au sens d'une épuration, soit par des procédés passifs de type filtration, soit par des procédés actifs mettant en jeu des technologies visant à transformer les polluants en produits neutres.

On peut distinguer quatre grandes familles de procédés actifs :
- Les procédés chimiques, consistant en une addition de composés venant fixer les polluants (chloration de l'eau par exemple).
- Les procédés thermiques, qui relèvent de la pasteurisation imposant une durée déterminée d'exposition à une température et une pression données.
- Les procédés organiques, caractérisés par la mise en oeuvre, dans le milieu pollué, d'organismes produisant une digestion des polluants.
- Les procédés photoniques basés sur les effets photo-biologiques de la lumière, incluant la lumière visible (380-780 nanomètres), la lumière presque ultra-violette (300-380 nm) et la lumière fortement ultra-violette (190-300 nm).

Les procédés photoniques ont été étudiés pendant de nombreuses années et des efforts ont été réalisés pour appliquer ce principe physico-chimique à l'épuration ou à la stérilisation de l'eau ou d'autres cibles. Par exemple, le brevet US N° 3 676 318 fait état d'un procédé et d'un appareil de purification de gaz de cheminées destinés en particulier à éliminer le dioxyde de soufre, le procédé consistant à pulvériser des gouttelettes d'eau chargées électriquement dans le gaz avant de soumettre celui-ci à un rayonnement ultra-violet en la faisant passer dans un tube de quartz à l'extérieur duquel est disposée une lampe flash au xénon entourée d'un réflecteur en aluminium; le brevet US N° 2 072 417 décrit l'irradiation de substances telles que le lait, avec des rayons actifs de type UV; le brevet US N° 3 817 703 décrit la stérilisation d'un matériel au moyen d'une lumière laser pulsée et le brevet US N° 3 941 670 fait état d'une méthode de stérilisation des matériels, ainsi que des produits alimentaires, en les exposant à un rayonnement laser pour désactiver les micro-organismes; le brevet FR N° 2 482 459 concerne un système de stérilisation des couches épaisses d' "aspergillus niger" utilisant une ampoule de type "flash" contenant un gaz rare émettant intensément dans la gamme de radiations ultra-violettes. Cette méthode s'est avérée plus efficace que celles utilisant une lampe de stérilisation à émission continue du type à vapeur de mercure.

Ces techniques présentent cependant des insuffisances, en particulier une capacité de débit limitée, une conversion d'énergie inefficace (de l'électricité à la lumière), et un couplage photonique de la partie utile de la lumière à la cible non optimal.

L'objectif de la présente invention est de proposer un dispositif d'épuration de fluide permettant d'obtenir des gains importants en rendement de puissance consommée, et de passer des débits importants dans un dispositif très compact.

Il est constitué d'une lampe impulsionnelle au xénon de forme hélicoïdale à une ou plusieurs spires émettant un rayonnement photonique allant du bas ultraviolet à l'infrarouge sans discontinuité, et montés sur un tube cylindrique en quartz dans lequel passe le film à traiter, cette lampe étant associée à une lampe longitudinale du même type immergée au centre du tube, l'ensemble étant disposé dans une enceinte dont les parois internes réfléchissent les rayonnements ultra-violets.

Sur les dessins schématiques annexés, donnés à titre d'exemples non limitatifs de formes de réalisation de l'objet de l'invention :
la figure 1 représente le système dans son ensemble,
la figure 2 est une coupe axiale agrandie de l'enceinte,
la figure 3 représente dans les mêmes conditions une variante d'exécution comportant une lampe d'irradiation immergée et une hélice destinée à rendre cyclonique le flux du fluide traité,
et les figures 4 et 5 sont des coupes longitudinales de deux variantes de réalisation de tubes de passage du fluide.

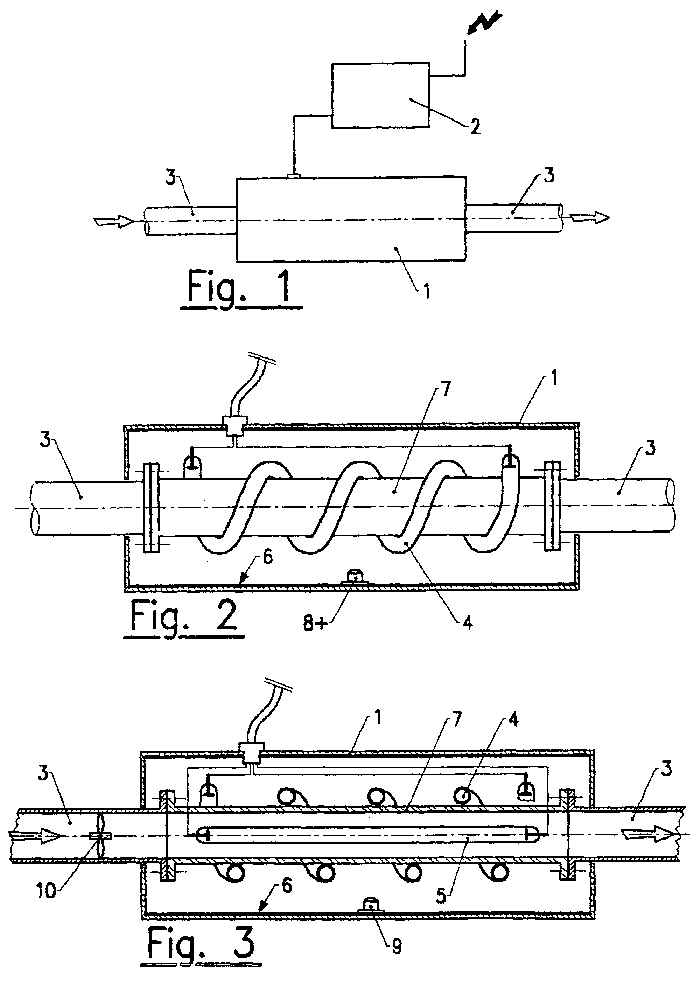

Le dispositif, figures 1 à 3, est constitué d'une enceinte 1 formant la cellule de traitement et d'un module d'alimentation électrique 2.

L'enceinte 1 est traversée par la canalisation 3 dans laquelle passe le fluide à traiter et contient la ou les lampes d'irradiation 4, 5. Cette enceinte, de préférence cylindrique, sera constituée, ou revêtue sur la face interne 6 de sa paroi, d'un matériau de nature à favoriser la réflexion de la gamme de longueur d'onde comprise dans la gamme des rayonnements ultraviolets (UV). Il s'agira avantageusement d'un aluminium pur, dont la couche d'oxyde présente un taux de réflexion des UV proche de 80 %.

Le rayonnement photonique est obtenu au moyen d'au moins une lampe hélicoïdale 1 à irradiation concentrique montée sur un tube cylindrique 7 dans lequel passe le fluide cible, et réalisé en quartz transparent aux longueurs d'onde souhaitées pour le traitement visé. Ce principe permet des gains importants en rendement de puissance consommée et permet de passer des débits importants dans un dispositif très compact.

Le principe d'irradiation concentrique offert par la disposition hélicoïdale de la ou des lampes permet toutes options en matière de couplage photonique. Il est en effet possible, suivant le coefficient d'extinction dû à l'absorption du rayonnement par le fluide cible, de compenser la perte par une irradiation supplémentaire fournie par une lampe complémentaire 5 immergée au centre du tube 7 de quartz. Cette lampe, à émission excentrique, permet alors une augmentation d'environ 65 % du débit admissible à traitement équivalent (épaisseur du fluide traversé augmenté d'environ 30 %).

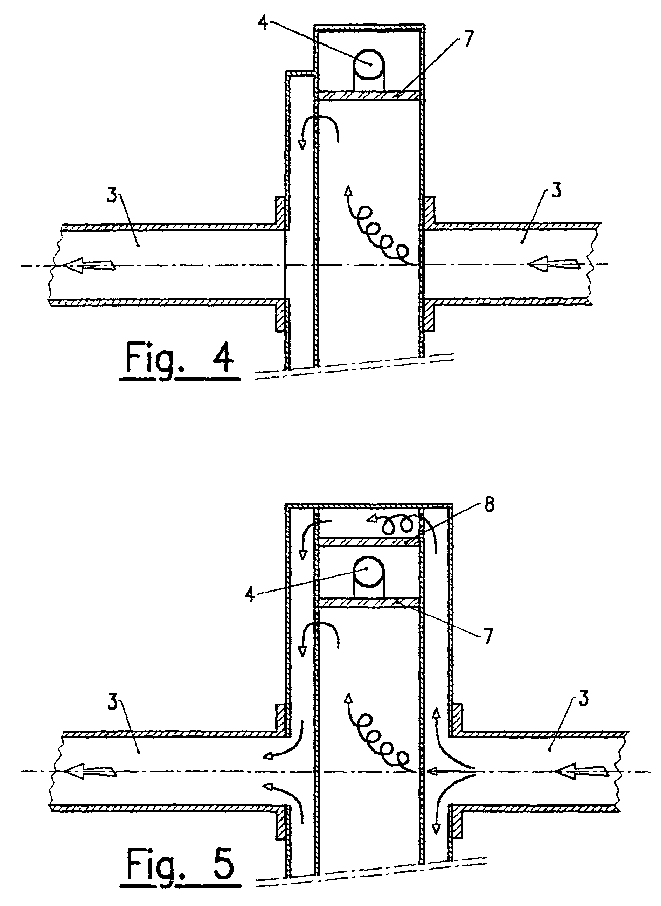

Sur la figure 4, le tube 7 de passage du fluide se présente sous la forme d'un tronçon de faible longueur et de fort diamètre par rapport à celui de la canalisation 3. Cette configuration permet un fort ralentissement du fluide du fait de l'importante section de la zone de traitement sans nécessiter une lampe 4 de longueur importante, ladite lampe pouvant avantageusement être mono-spire. L'intérêt majeur de cette disposition est d'augmenter le temps de présence d'un volume unitaire de fluide en regard de l'irradiation photonique. Le tube 7 comporte une entrée centrale et des sorties périphériques de manière à ce que le parcours du fluide se fasse du centre vers l'extérieur, donc des énergies surfaciques les plus élevées vers les plus faibles, à la périphérie. Les sections équivalentes d'entrée et de sortie seront constituées d'une multitude de trous favorisant la turbulence et la maîtrise du parcours moyen de chaque volume élémentaire de fluide.

En plus du tube central 7, le dispositif peut comporter un tube périphérique 8 de passage du fluide, externe à la lampe 4 et dont le rôle est de permettre une augmentation de section de passage de l'ordre de 25 % et donc une augmentation de débit d'environ 50 % (figure 5).

La ou les lampes 4, 5 sont des lampes de type "flash" au xénon émettant une lumière impulsionnelle s'étalant sur un spectre allant du bas UV au visible, et offrant un rendement extrêmement favorable dans la conversion énergétique de l'électricité à l'optique. L'effet épurateur est alors obtenu par l'émission UV (germicide) complétée par la densité énergétique visible générant une onde de choc liée à la détente de la décharge photonique. La concentration de ce flash sur une durée allant de 100 microsecondes à 100 millisecondes offre une densité d'énergie photonique permettant de traverser une couche de fluide compatible d'une part avec les débits à traiter et, d'autre part, avec leur teneur en particules solides en suspension définie comme étant une turbidité moyenne.

La morphologie électrique de l'impulsion de courant générant chaque flash est telle qu'elle permet un rendement entre 2 et 15 % dans le spectre dit germicide, qui est le spectre d'absorption de l'ADN, centré sur la longueur d'onde de 257 nanomètres.

Lors de la génération de l'impulsion de courant sont systématiquement mesurées et contrôlées des valeurs telles que l'impédance caractéristique de la lampe comme valeur significative de vieillissement ou de défaut. Ces informations pouvant être exploitées comme tout signal fourni à un automate externe. Le contrôle du vieillissement de la ou des lampe(s) pourra être complété par un capteur 9 de type diode UV intégré dans la paroi de l'enceinte 1.

Dans le cas d'une lampe périphérique 4 multispires, afin de rendre cyclonique la nature du flux traversant le dispositif d'épuration, celui-ci pourra avantageusement comporter une hélice 10 immergée dans la conduite d'amenée. Cet effet de giration du flux dans la cellule de façon turbulente apporte une augmentation de l'efficacité de traitement du fait que l'on peut alors considérer que toute particule cible passe au moins une fois au plus près de la ou des lampe(s), et que le parcours moyen d'un volume élémentaire est sensiblement allongé augmentant ainsi le temps de présence et en favorisant la dose de rayonnement intégrée.

Le positionnement des divers éléments constitutifs donne à l'objet de l'invention un maximum d'effets utiles qui n'avaient pas été, à ce jour, obtenus par des dispositifs similaires.

## Revendications

1. Dispositif d'épuration de fluide par impulsions photoniques, destiné en particulier au traitement de l'eau, mais utilisable pour un gaz ou un liquide autre que l'eau, comportant une lampe hélicoïdale (4) impulsionnelle de type 'flash » au xénon, à une ou plusieurs spires et à irradiation concentrique émettant un rayonnement photonique allant du bas ultraviolet à l'infrarouge sans discontinuité, ladite lampe étant montée sur un tube central (7) en quartz dans lequel passe le fluide à traiter, l'ensemble étant disposé dans une enceinte (1) comportant des parois internes (6) favorisant la réflexion de la gamme de longueur d'onde comprise dans la gamme des rayonnements ultraviolets, **caractérisé en ce que** la lampe hélicoïdale (4) est associée à une lampe longitudinale (5) de même type immergée dans le fluide au centre du tube central (7).

2. Dispositif selon la revendication 1, **se caractérisant par le fait que** le tube central (7) de passage du fluide se présente sous la forme d'un tronçon de faible longueur et de fort diamètre par rapport à celui de la canalisation (3), ledit tube comportant une entrée centrale et des sorties périphériques de manière à ce que le parcours du fluide se fasse du centre vers l'extérieur, les sections équivalentes d'entrée et de sortie étant constituées d'une multitude de trous favorisant la turbulence de chaque volume élémentaire de fluide.

3. Dispositif selon la revendication 2, **se caractérisant par le fait qu'**il comporte, en plus du tube central (7), un tube périphérique (8) de passage du fluide, externe à la lampe hélicoïdale (4) et déterminé pour permettre une augmentation de section de passage de l'ordre de 25%, et donc une augmentation de débit d'environ 50%.

4. Dispositif selon l'une quelconque des revendications précédentes, **se caractérisant par le fait qu'**un capteur (8) de type diode UV est intégré dans la paroi de l'enceinte (1) de manière à permettre le contrôle du vieillissement de la ou des lampe(s) (4, 5).

5. Dispositif selon l'une quelconque des revendications précédentes, **se caractérisant par le fait que** la conduite d'amenée du fluide comporte une hélice (10) immergée apte à rendre le flux dudit fluide cyclonique et turbulent.

6. Dispositif selon l'une des revendications précédentes, **caractérisé en ce que** la morphologie électrique de l'impulsion de courant générant les flash de la lampe hélicoïdale (4) est déterminée pour permettre un rendement entre 2 et 15% dans le spectre dit germicide centré sur la longueur d'onde de 257 nanomètres, la durée de chaque flash étant comprise entre 100 microsecondes et 100 millisecondes.

## Claims

1. A device for purifying a fluid with photonic pulses, particularly adapted for treating water but which can be used for a gas or a liquid other than water, comprising a helical pulse xenon flash lamp (4) having one or several turns with concentric irradiation emitting a photonic radiation ranging from a low ultraviolet to an unbroken infrared, said lamp being mounted on a central quartz tube (7) through which passes the fluid to be treated, this assembly being disposed in a chamber (1) whose inner walls (6) promote reflection of the wavelength range included in the ultraviolet radiation range, the device being **characterised in that** the helical lamp (4) is associated with a longitudinal lamp (5) of the same type immersed in the fluid in the centre of the central tube (7).

2. The device according to claim 1, being **characterised by** the fact that the central tube (7) for the passage of the fluid is in the form of a short section with a large diameter compared to that of the channel (3), said tube comprising a central inlet and peripheral outlets such that the travel of the fluid occurs from the centre outward, the equivalent inlet and outlet sections being constituted of a multitude of holes promoting the turbulence of each elementary fluid volume.

3. The device according to claim 2, being **characterised by** the fact that it comprises, in addition to the central tube (7), a peripheral tube (8) for the passage of the fluid, outside the helical lamp (4) and determined in order to enable an increase in the passage section on the order of 25% and, therefore, an increase in the output of about 50%.

4. The device according to any one of the preceding claims, being **characterised by** the fact that a UV diode type sensor (8) is integrated in the wall of the chamber (1) so as to enable the control of the aging of the lamp(s) (4, 5).

5. The device according to any one of the preceding claims, being **characterised by** the fact that the inlet conduit of the fluid comprises an immersed helix (10) which is adapted to render the flow of said fluid cyclonic and turbulent.

6. The device according to any one of the preceding claims, **characterised in that** that the electrical morphology of the current pulse generating each flash of the helical lamp (4) is determined in order to enable an output between 2 and 15% in the so-called germicidal spectrum centred on the wavelength of 257 nanometers, the duration of each flash being between 100 microseconds and 100 milliseconds.

## Patentansprüche

1. Vorrichtung zur Reinigung eines Fluids mittels photoionischer Impulse, insbesondere für die Wasserbehandlung vorgesehen, jedoch für ein Gas oder für eine Flüssigkeit anders als Wasser einsetzbar, umfassend eine schraubenförmige Impulslampe (4) des "Flash"-Typs mit Xenon, mit einer oder mehreren Windung(en) und mit konzentrischer Einstrahlung, die photoionische Strahlungen ausgehend vom niedrigen Ultraviolett bis zum Infrarot ohne Unterbrechungen abgibt, wobei diese Lampe auf einem zentralen Quarzrohr (7) montiert ist, welches von dem zu behandelnden Fluid durchströmt ist und wobei die Gesamtheit in einer Einfassung (1) mit internen, die Rückstrahlung des Ultraviolettstrahlungsbereiches fördernden Wandungen (6) angeordnet ist, **dadurch gekennzeichnet, dass** die schraubenförmige Lampe (4) einer länglichen Lampe (5) von gleicher Art zugeordnet ist, die in der Mitte des zentralen Rohres (7) ins Fluid eingetaucht ist.

2. Vorrichtung nach Anspruch 1, **dadurch gekennzeichnet, dass** das zentrale Rohr (7) zum Fluiddurchgang sich in Form eines Abschnittes kurzer Länge und verglichen mit dem der Rohrleitung (3) grossen Durchmessers präsentiert, wobei dieses Rohr einen zentralen Eingang und Umfangsausgänge derart umfasst, dass sich der Durchgang des Fluids vom Zentrum nach Aussen richtet, wobei die entsprechenden Eingangs- und Ausgangsabschnitte aus einer Vielzahl von die Wirbelströmung eines jeden elementaren Fluidvolumens fördernden Bohrungen bestehen.

3. Vorrichtung nach Anspruch 2, **dadurch gekennzeichnet, dass** sie neben dem zentralen Rohr (7) ein Umfangsrohr (8) für den Fluiddurchgang umfasst, das ausserhalb von der schraubenförmigen Lampe (4) liegt und bestimmt ist, eine Vergrösserung von etwa 25 % des Durchgangsquerschnittes und daher eine Durchflusszunahme von etwa 50 % zu ermöglichen.

4. Vorrichtung nach irgendeinem der vorstehenden Ansprüche, **dadurch gekennzeichnet, dass** ein Fühler (8) des UV-Diode-Typs in der Wandung der Einfassung (1) integriert ist, um die Alterungskontrolle der Lampe(n) (4, 5) zu ermöglichen.

5. Vorrichtung nach irgendeinem der vorstehenden Ansprüche, **dadurch gekennzeichnet, dass** die Fluidzufuhrleitung eine eingetauchte Schnecke (10) umfasst, die geeignet ist, den Fluss des genannten Fluids zyklonisch und turbulent zu machen.

6. Vorrichtung nach irgendeinem der vorstehenden Ansprüche, **dadurch gekennzeichnet, dass** die elektrische Morphologie des die Blitze der schraubenförmigen Lampe (4) erzeugenden Stromes dazu ausgelegt ist, eine Ausbeute zwischen 2 und 15 % im genannten auf der Wellenlänge von 257 Nanometern zentrierten keimtötenden Spektrum zu erzielen, wobei jede Blitzdauer zwischen 100 Mikrosekunden und 100 Millisekunden liegt.
